# EUROPÄISCHE PATENTANMELDUNG

(11) **EP 0 962 136 A1**
(43) Veröffentlichungstag der Anmeldung: **08.12.1999**
(21) Anmeldenummer: 98109429.5
(22) Anmeldetag: 25.05.1998
(51) Int. Cl.: A01N 35/02

(54) **Mittel und Verfahren zur Bekämpfung von Schnecken**

(71) Anmelder: LONZA AG, CH-3945 Gampel/Wallis (CH)
(72) Erfinder: Blum, René, 4310 Rheinfelden (CH); Siegrist, Walter, 3930 Visp (CH)

(57) **Zusammenfassung**

Beschrieben wird ein molluskizides Mittel, das sich insbesondere zur Bekämpfung von aquatischen Schnecken, beispielsweise in Fischteichen oder Reisfeldern, eignet. Das Mittel besteht aus einem körnigen Trägermaterial hoher Dichte wie beispielsweise Sand oder gemahlenem Kalkstein und einer darauf aufgebrachten Beschichtung, die Metaldehyd als Wirkstoff und wenigstens ein Bindemittel enthält. Das Mittel kann durch Beschichtung in üblichen Granulier- oder Pelletiervorrichtungen hergestellt werden und sinkt beim Aufbringen auf eine Wasseroberfläche rasch auf den Grund.

## Beschreibung

Die vorliegende Erfindung betrifft ein Mittel und ein Verfahren zur Bekämpfung von Schnecken, insbesondere von aquatischen Schnecken in Fischteichen, Reisfeldern und ähnlichen Kulturen, sowie Verfahren zur Herstellung des Mittels.

Aquatische, d. h. wasserlebende, Schnecken sind insbesondere in Teichen für die Kultur von (pflanzenfressenden) Fischen oder auch in überfluteten Pflanzenkulturen (z. B. Reisfelder) bedeutende Schädlinge. Sie verursachen Ertragsminderungen, indem sie den Fischen einen Teil der Nahrung wegfressen bzw. die Kulturpflanzen schädigen oder vernichten. Da in der Praxis Populationsdichten von einigen tausend Schnecken pro m² keine Seltenheit sind, ist leicht vorstellbar, dass diese erhebliche Schäden anrichten. Während für die Bekämpfung von landlebenden Schnecken erprobte und wirksame Mittel und Verfahren existieren, stehen solche für die Anwendung im bzw. unter Wasser bisher kaum zur Verfügung. Die Anwendung von molluskiziden Wirkstoffen wie beispielsweise Metaldehyd in Form von Pulver oder wässriger Suspension führt meistens nicht zu den gewünschten Ergebnissen, weil der Wirkstoff nicht in der erforderlichen Konzentration die Aufenthaltsorte der Schnecken auf dem Grund oder an Wasserpflanzen erreicht, sondern sich im Wasser oder sogar auf der Wasseroberfläche verteilt. Die gegen landlebende Schnecken erfolgreich eingesetzten Köder in Pelletform ( 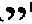 Schneckenkorn") sind ebenfalls ungeeignet, weil sie zum einen nicht in der für die Anwendung unter Wasser optimalen Korngrösse hergestellt werden können und zum anderen die wasserlebenden Schnecken aus den Pellets keine ausreichende Wirkstoffdosis aufnehmen.

Aufgabe der vorliegenden Erfindung war daher, ein zur Bekämpfung von aquatischen Schnecken geeignetes Mittel bereitzustellen, welches die Schnecken auch tatsächlich erreicht und zur Aufnahme einer tödlichen Wirkstoffdosis veranlasst.

Erfindungsgemäss wird diese Aufgabe durch das Mittel nach Patentanspruch 1, die Herstellungsverfahren nach Patentansprüchen 7 und 8 und das Schneckenbekämpfungsverfahren nach Patentanspruch 13 gelöst.

Es wurde gefunden, dass ein Mittel, bestehend aus einem körnigen Trägermaterial mit einer Dichte grösser als 1 g/cm³ und einer darauf aufgebrachten Beschichtung, welche Metaldehyd als Wirkstoff und wenigstens ein Bindemittel enthält, sich gut zur Bekämpfung von aquatischen Schnecken eignet. Die Dichte des Trägermaterial muss grösser als 1 g/cm³ sein, weil das Mittel sonst nach dem Ausbringen auf eine Wasseroberfläche nicht wie gewünscht auf den Grund sinken würde. Bevorzugt sind Trägermaterialien mit einer Dichte von 1,5 g/cm³ und höher, insbesondere solche mit einer Dichte von 2 g/cm³ und höher. Ein Bindemittel ist erforderlich, um sicherzustellen, dass sich der Wirkstoff nicht von der Trägeroberfläche ablöst, bevor das Mittel den Lebensraum der Schnecken erreicht hat.

Vorzugsweise besteht das Trägermaterial im wesentlichen aus Sand und/oder zerkleinertem Gestein. Diese Materialien sind auch bei jahrelangem Gebrauch und in grösseren Mengen ökologisch unbedenklich. Als Sand kann beispielsweise Quarzsand (ρ = 2,65 g/cm³) oder Korallensand (ρ ≈ 2,9 g/cm³) eingesetzt werden.

Besonders gute Ergebnisse werden mit zerkleinertem Kalkstein als Trägermaterial erzielt. Dieses Material hat den Vorteil, dass es, beispielsweise im Vergleich zu Quarzsand, wenig abrasiv ist und eine rauhere Oberfläche besitzt, welche die Haftung der Beschichtung verbessert.

Das Trägermaterial besitzt vorzugsweise eine Korngrösse von 0,1 bis 2 mm, besonders bevorzugt ist eine Körnung von 0,1 bis 1 mm. Körner dieser Grösse sinken einerseits in Wasser hinreichend schnell auf den Grund, andererseits besitzen sie eine ausreichende spezifische Oberfläche, um genügende Wirkstoffmengen aufzunehmen, und sie ermöglichen eine gleichmässigere Verteilung des Mittels als grössere Partikel.

Als Bindemittel eignen sich insbesondere wasserlösliche Verbindungen wie beispielsweise Natriumsilicat ( 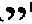 Wasserglas") oder Polyacrylsäureharze. Natriumsilicat hat ausserdem den Vorteil, dass es durch seine alkalische Reaktion die Zersetzung (Depolymerisation) von Metaldehyd unterdrückt.

Die wirkstoffhaltige Beschichtung des erfindungsgemässen Mittels enthält vorzugsweise mindestens einen hydrophilen Füllstoff. Dieser verbessert die Gleichmässigkeit der Beschichtung und die Benetzbarkeit.

Besonders bevorzugt als Füllstoff sind Materialien auf Schichtsilikatbasis wie Tone und Tonmineralien. Beispiele hierfür sind Kaolin, Bentonit und deren Bestandteile Kaolinit und Montmorillonit. Besonders gute Ergebnisse werden mit dem beispielsweise unter der Bezeichnung 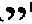 Bolus alba" im Handel erhältlichen Kaolin erreicht.

Ein bevorzugtes Verfahren zur Herstellung der erfindungsgemässen Mittel besteht darin, dass ein körniges Trägermaterial mit einer Dichte grösser als 1 g/cm³ in einer Granulier- oder Pelletiervorrichtung mit Metaldehyd in Pulverform und gegebenenfalls zusätzlichen Füll- und/oder Hilfsstoffen durch Zugabe einer Bindemittellösung beschichtet und anschliessend getrocknet wird.

Ein weiteres bevorzugtes Verfahren zur Herstellung der erfindungsgemässen Mittel besteht darin, dass ein körniges Trägermaterial mit einer Dichte grösser als 1 g/cm³ in einer Granulier- oder Pelletiervorrichtung mit einer Suspension, die Metaldehyd, ein Bindemittel und gegebenenfalls zusätzliche Füll- und/oder Hilfsstoffe enthält, sowie gegebenenfalls Füll- und/oder Hilfsstoffen in Pulverform beschichtet und anschliessend getrocknet wird. Die für dieses Verfahren benötigte Metaldehyd-Suspension wird vorzugsweise durch Nassmahlung von Metaldehyd in Wasser mit einem Zusatz an Netz- und Dispergiermittel hergestellt, sie hat vorteilhaft einen möglichst hohen Metaldehydgehalt von beispielsweise 50 Gew.%.

Als Granulier- oder Pelletiervorrichtung für beide Verfahren eignen sich beispielsweise die handelsüblichen Pelletierteller und -trommeln, wie sie von verschiedenen Herstellern, insbesondere der Firma Eirich, angeboten werden. Besonders gute Resultate werden mit den unter der Bezeichnung Eirich-Mischgranulator bekannten Vorrichtungen erzielt. Mit diesen ist es möglich, mit niedrigen Flüssigkeitsmengen auszukommen und so den Zeit- und Energieaufwand für die Trocknung zu reduzieren.

Die Trocknung wird vorteilhaft bei niedriger Temperatur durchgeführt, um eine Zersetzung des wärmeempfindlichen Metaldehyds zu vermeiden.

Mögliche Hilfsstoffe sind beispielsweise Netzmittel, Farbstoffe zur Markierung und/oder leichteren Identifizierung der erfindungsgemässen Mittel oder Repellents wie Scharf- oder Bitterstoffe, die eine unerwünschte Aufnahme durch andere Tiere und deren mögliche Schädigung verhindern sollen.

Die eingesetzten Trägermaterialien bestehen vorzugsweise im wesentlichen aus Sand und/oder zerkleinertem Gestein.

Besonders bevorzugt als Trägermaterial ist zerkleinerter Kalkstein.

Das Trägermaterial besitzt vorzugsweise eine Korngrösse von 0,1 bis 2 mm, besonders bevorzugt 0,1 bis 1 mm.

Vorzugsweise wird als Füllstoff ein Material auf Schichtsilicatbasis eingesetzt.

Das erfindungsgemässe Mittel wird vorzugsweise zur Bekämpfung von aquatischen Schnecken, insbesondere in Fischteichen oder Reisfeldern, eingesetzt, indem es auf die Wasseroberfläche aufgebracht wird. Die Aufwandmenge hängt hierbei unter anderem von der Befallsdichte ab und liegt in der Regel zwischen 1 und 10 g/m² (10―100 kg/ha).

Die nachfolgenden Beispiele verdeutlichen die Herstellung und Anwendung des erfindungsgemässen Mittels. Die Beurteilung des Sinkverhaltens erfolgte, indem jeweils 0,1 g des Produkts mittels eines Vibro-Spatels (Mettler LV 2) aus 10 cm Höhe auf eine 0,3%ige Kochsalzlösung gestreut und nach ca. 5 s der Anteil an abgesunkenen Körnern bestimmt wurde.

### Beispiel 1

Auf einem Pelletierteller (Typ Eirich TR04) wurden 800 g Quarzsand (Typ Sihelco 32, Sihelco AG, Birsfelden/Schweiz, Korngrösse 0,125―0,50 mm) durch kontinuierliches Aufsprühen von 123 g einer wässrigen Natriumsilicatlösung (4,1% Na₂O-Gehalt) mit Zusatz von 0,3% Netzmittel IGEPAL® CO 630 (Octylphenoxypoly(ethylenoxy)ethanol, Hersteller Rhône Poulenc Chimie) mit einem Gemisch aus 125 g benetzbarem Metaldehyd-Pulver (Typ Porsnail, 75% Metaldehydgehalt, 25% Kaolin, Hersteller: Agchem, Manila/Philippinen) und 75 g Bolus alba (Kaolin) beschichtet. Das so erhaltene Granulat wurde in einem Umlufttrockenschrank bei 30―35 °C getrocknet und durch Sieben (1,0 mm Maschenweite) von groben Agglomeraten befreit. Die Ausbeute an 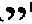 Gutkorn" (≤1,0 mm) betrug 97,3%, der analytisch bestimmte Metaldehydgehalt 8,8%.

### Beispiel 2

Es wurde verfahren wie in Beispiel 1 beschrieben, jedoch wurde anstelle von Quarzsand gemahlener Kalkstein in gleicher Menge und Korngrösse eingesetzt. Die Menge an Metaldehydpulver betrug 140 g, die an Bolus alba 57 g. Zusätzlich wurden noch 3 g Sipernat® 22 LS (hochdisperse Fällungskieselsäure, Hersteller: Degussa AG) beigemischt. Insgesamt wurden 146 g Natriumsilicatlösung eingesetzt. Die Gutkornausbeute betrug 97,1%, der Metaldehydgehalt 7,8%.

### Beispiel 3

In einem Intensivmischer (Typ Eirich MPM R 02) wurden 2400 g Quarzsand (Typ Sihelco 32), vorgelegt und unter Rühren (Mischer- und Trommeldrehzahl auf Stufe 1) mit 300 g einer wässrigen Natriumsilicatlösung (6,15% Na₂O-Gehalt) mit Zusatz von 0,3% Netzmittel IGEPAL® CO 630 vermischt.

Anschliessend wurde innerhalb von ca. 10 s ein Gemisch aus 420 g benetzbarem Metaldehyd-Pulver (Typ Porsnail, 75% Metaldehydgehalt) und 171 g Bolus alba (Kaolin) sowie 9 g Sipernat® 22 LS zugesetzt. Dann wurden Mischer- und Trommeldrehzahl noch 15 s auf Stufe 2 geschaltet, wonach der Beschichtungsvorgang beendet war. Das so erhaltene Granulat wurde in einem Umlufttrockenschrank bei 30―35 °C getrocknet und durch Sieben (1,0 mm Maschenweite) von groben Agglomeraten befreit. Die Gutkornausbeute betrug 96,2%, der Metaldehydgehalt 8,6%.

### Beispiel 4

Es wurde verfahren wie in Beispiel 3 beschrieben, jedoch wurde anstelle von Quarzsand die gleiche Menge an gemahlenem Kalkstein der Korngrösse 0,5―1,0 mm und nur 285 g Natriumsilicatlösung eingesetzt. Das so erhaltene Granulat wurde in einem Umlufttrockenschrank bei 30―35 °C getrocknet und durch Sieben (1,25 mm Maschenweite) von groben Agglomeraten befreit. Die (Gutkornausbeute betrug 98,4%, der Metaldehydgehalt 8,8%. Das Produkt war gut benetzbar und sank auch in Brackwasser rasch auf den Grund.

### Beispiel 5

In einem Intensivmischer (Typ Eirich MPM R 02) wurden 2100 g gemahlener Kalkstein (Korngrösse 0,1―0,7 mm) vorgelegt und unter Rühren (Mischer- und Trommeldrehzahl auf Stufe 1) mit 150 g einer wässrigen Bindemittellösung, enthaltend 1,09% Joncryl™ 678 (Polyacrylsäureharz, Hersteller: S. C. Johnson & Son Inc.) und 0,25% SER-AD® FX 1100 (Polyetherpolyurethan, Hersteller: Servo Delden BV, Delden/Niederlande) vermischt. Anschliessend wurde innerhalb von ca. 10 s ein Gemisch aus 420 g benetzbarem Metaldehyd-Pulver (Typ Porsnail, 75% Metaldehydgehalt) und 450 g Bolus alba (Kaolin) sowie 30 g Sipernat® 22 LS zugesetzt. Dann wurden Mischer- und Trommeldrehzahl noch für 30 s auf Stufe 2 geschaltet, wonach der Beschichtungsvorgang beendet war.

Das so erhaltene gleichmässig und vollständig umhüllte Granulat wurde bei Raumtemperatur getrocknet und durch Sieben (1,0 mm Maschenweite) von groben Agglomeraten befreit. Die Gutkornausbeute betrug 98,4%, der Metaldehydgehalt 9,1%. Das Produkt wies eine sehr geringe Tendenz zur Staubbildung auf, war gut benetzbar und sank beim Ausbringen auf eine Wasseroberfläche rasch auf den Grund. Weiterhin wurde beobachtet, dass sich die wirkstoffhaltige Beschichtung unter Wasser nach kurzer Zeit von Trägermaterial ablöste.

### Beispiel 6

In einem Intensivmischer (Typ Eirich MPM R 02) wurden 2160 g gemahlener Kalkstein (Korngrösse 0,1―0,6 mm) vorgelegt und unter Rühren (Mischer- und Trommeldrehzahl auf Stufe 1) innerhalb von 20 s mit 240 g einer wässrigen Metaldehydsuspension (50% Metaldehyd, hergestellt durch Nassmahlung auf<10 µm mit Zusatz von 0,64% Joncryl™ und 0,15% SER-AD®) vermischt. Anschliessend wurde innerhalb von 20 s die Hälfte einer Pulvermischung aus 573 g Bolus alba (Kaolin) sowie 30 g Sipernat® 22 LS zugesetzt und weitere 20 s bei hoher Drehzahl untergemischt. Dann wurden nochmals 240 g Metaldehydsuspension zugegeben und nach weiteren 15 s bei hoher Drehzahl innerhalb von 20 s bei niedriger Drehzahl die andere Hälfte der Pulvermischung. Schliesslich wurde das Ganze noch 45 s bei hoher Drehzahl homogenisiert. Das so erhaltene Granulat wurde bei Raumtemperatur getrocknet und durch Sieben (1,0 mm Maschenweite) von groben Agglomeraten befreit. Die (Gutkornausbeute betrug 99,0%, der Metaldehydgehalt 5,9%. Das Produkt wies beim Ausbringen auf eine Wasseroberfläche ein ausgezeichnetes Sinkverhalten auf.

## Patentansprüche

1. Molluskizides Mittel, insbesondere zur Bekämpfung von aquatischen Schnecken, bestehend aus einem körnigen Trägermaterial mit einer Dichte grösser als 1 g/cm³ und einer darauf aufgebrachten Beschichtung, welche Metaldehyd als Wirkstoff und wenigstens ein Bindemittel enthält.

2. Molluskizides Mittel nach Anspruch 1, dadurch gekennzeichnet, dass das Trägermaterial im wesentlichen aus Sand und/oder zerkleinertem Gestein besteht.

3. Molluskizides Mittel nach Anspruch 2, dadurch gekennzeichnet, dass das Trägermaterial aus zerkleinertem Kalkstein besteht.

4. Molluskizides Mittel nach einem der Ansprüche 1 bis 3, dadurch gekennzeichnet, dass das Trägermaterial eine Korngrösse von 0,1 bis 2 mm, vorzugsweise 0,1 bis 1 mm, besitzt.

5. Molluskizides Mittel nach einem der Ansprüche 1 bis 4, dadurch gekennzeichnet, dass die Beschichtung mindestens einen hydrophilen Füllstoff enthält.

6. Molluskizides Mittel nach Anspruch 5, dadurch gekennzeichnet, dass als hydrophiler Füllstoff ein Material auf Schichtsilicatbasis eingesetzt wird.

7. Verfahren zur Herstellung eines molluskiziden Mittels gemäss Anspruch 1, dadurch gekennzeichnet, dass ein körniges Trägermaterial mit einer Dichte grösser als 1 g/cm³ in einer Granulier- oder Pelletiervorrichtung mit Metaldehyd in Pulverform und gegebenenfalls zusätzlichen Füll- und/oder Hilfsstoffen durch Zugabe einer Bindemittellösung beschichtet und anschliessend getrocknet wird.

8. Verfahren zur Herstellung eines molluskiziden Mittels gemäss Anspruch 1, dadurch gekennzeichnet, dass ein körniges Trägermaterial mit einer Dichte grösser als 1 g/cm³ in einer Granulier- oder Pelletiervorrichtung mit einer Suspension, die Metaldehyd, ein Bindemittel und gegebenenfalls zusätzliche Füll- und/oder Hilfsstoffe enthält, sowie gegebenenfalls Füll- und/oder Hilfsstoffen in Pulverform beschichtet und anschliessend getrocknet wird.

9. Verfahren nach Anspruch 7 oder 8, dadurch gekennzeichnet, dass das Trägermaterial im wesentlichen aus Sand und/oder zerkleinertem Gestein besteht.

10. Verfahren nach Anspruch 9, dadurch gekennzeichnet, dass das Trägermaterial aus zerkleinertem Kalkstein besteht.

11. Verfahren nach einem der Ansprüche 7 bis 10, dadurch gekennzeichnet, dass das Trägermaterial eine Korngrösse von 0,1 bis 2 mm, vorzugsweise 0,1 bis 1 mm, besitzt.

12. Verfahren nach einem der Ansprüche 7 bis 11, dadurch gekennzeichnet, dass als Füllstoff ein Material auf Schichtsilicatbasis eingesetzt wird.

13. Verfahren zur Bekämpfung von aquatischen Schnecken, insbesondere in Fischteichen oder Reisfeldern, dadurch gekennzeichnet, dass ein Mittel gemäss Anspruch 1 auf die Wasseroberfläche aufgebracht wird.
